# EUROPEAN PATENT SPECIFICATION

(11) **EP 3 109 580 B1**
(45) Date of publication and mention of the grant of the patent: **06.01.2021**
(21) Application number: 16157901.6
(22) Date of filing: 29.02.2016
(51) Int. Cl.: F25D 23/10, F25D 23/00, B60H 1/00, B60H 1/32

(54) **COMPRESSOR REFRIGERATOR FOR A MOTOR VEHICLE**
KOMPRESSORKÜHLSCHRANK FÜR EIN KRAFTFAHRZEUG
RÉFRIGÉRATEUR À COMPRESSEUR POUR UN VÉHICULE AUTOMOBILE

(30) Priority: 25.06.2015 US 201562184387 P
(43) Date of publication of application: 28.12.2016
(73) Proprietor: Thetford BV, 4870 AD Etten-Leur (NL)
(72) Inventor: Berkhout, Pieter Dirk, 3317 EA Dordrecht (NL); Valder, Dirk, 47239 Duisburg (DE); Donders, Patrick, 5146 CE Waalwijk (NL); Balemans, Mattijs, 4616 AJ Bergen op Zoom (NL); Haans, Victor, 3059 VB Rottderdam (NL); Van Eil, Louis, 4861 AA Chaam (NL)
(74) Representative: Clarenbach, Carl-Philipp

(56) References cited:
- US-A- 4 699 207
- US-A1- 2006 201 667
- US-B1- 6 543 250

## Description

### FIELD

The present disclosure relates generally to refrigerators. More particularly, the present disclosure relates to a compressor refrigerator for a motor vehicle.

### BACKGROUND

This section merely provides background information related to the present disclosure and may not constitute prior art.

Vehicles, including but not limited to, camper vans, recreational vehicles ("RVs", in the United States and "Caravans" or "Mobile Homes" in Europe), tractor trailers, airplanes, boats, trains and the like, often incorporate refrigerators for the comfort and convenience of the occupants. For example, campers often find it convenient, or even necessary, to refrigerate food, drinks, and medicine during their journey and while at their campsites. While many prepared camp sites in parks and commercial campgrounds provide for electrical outlets, many do not. Moreover, many highly desirable camping locations exist outside of these prepared sites. Thus, a popular solution has been to equip the recreational vehicle with a refrigerator. Such refrigerators are generally absorption refrigerators or compressor refrigerators. Document US 2006/0201667 A1 discloses a heat dissipater device that comprises a housing with an intake and an exhaust as well as an air medium disposed within an enclosure. In the patent document US 6,543,250 B1 a refrigerator cabinet is disclosed which comprises a permanently installed ventilation frame. Furthermore, it is known from US-patent US 4,699,207 A to provide a recreational vehicle with an integrated venting system that includes cool air inlets in a lower portion of the vehicle body and a common warm air outlet in another portion of the vehicle body located at level above the cool air inlet.

While known refrigerators have proven to be generally acceptable for camper vans and the like, continuous improvement in the relative arts is desired.

### SUMMARY

This section provides a general summary of the disclosure, and is not a comprehensive disclosure of its full scope or all of its features.

In accordance with one particular aspect, the present teachings provide a compressor refrigerator for a motor vehicle with the features of claim 1.

Further areas of applicability will become apparent from the description provided herein. The description and specific examples in this summary are intended for purposes of illustration only and are not intended to limit the scope of the present disclosure.

### DRAWINGS

The present teachings will become more fully understood from the detailed description, any appended claims and the following drawings. The drawings are for illustrative purposes only and are not intended to limit the scope of the present disclosure.

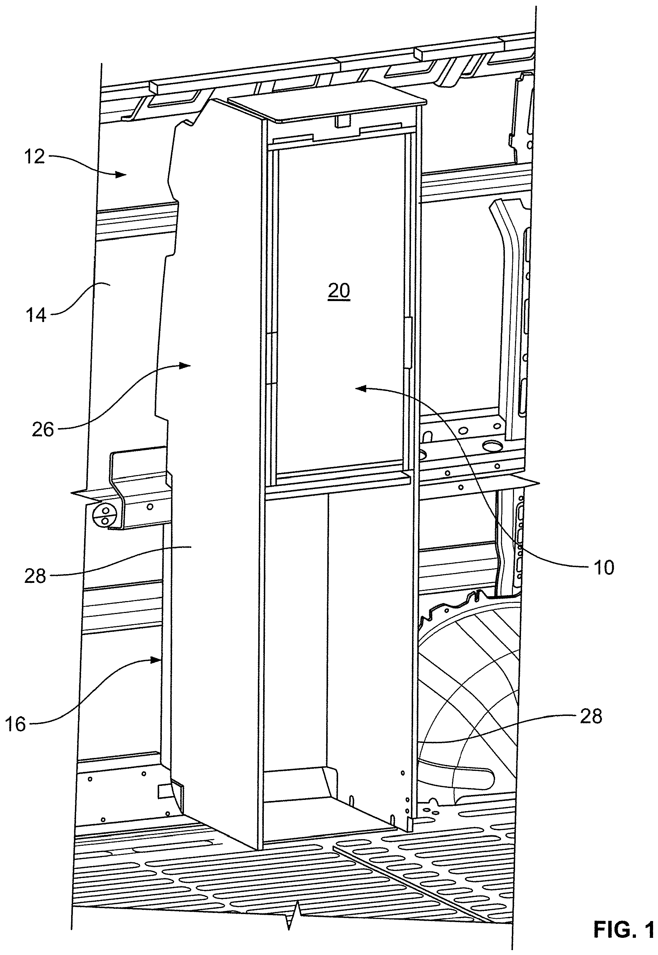

Figure 1 is a front perspective view of a compressor refrigerator in accordance with the present teachings, the compressor refrigerator shown operatively associated with a chassis of a vehicle such as a camper van.
Figure 2 is a rear perspective view of the compressor refrigerator of Figure 1, the compressor refrigerator shown partially cutaway and removed from the environment of Figure 1 for purposes of illustration.

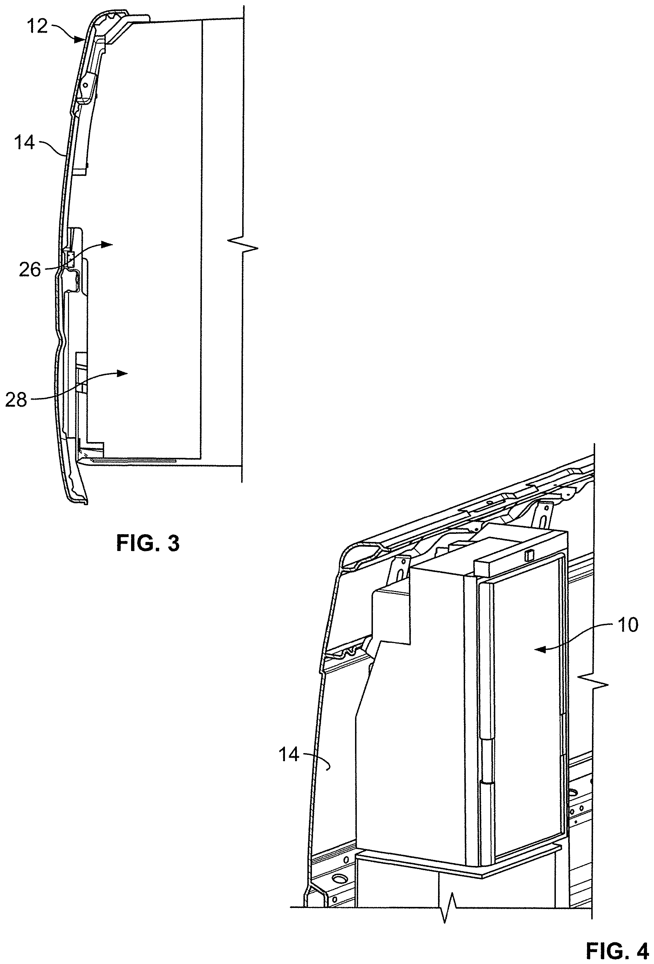

Figure 3 is a cross-sectional side view of the compressor refrigerator of Figure 1, the compressor refrigerator again shown operatively associated with a chassis of a camper van.
Figure 4 is a front perspective view of the compressor refrigerator of Figure 1, the compressor refrigerator again shown operatively associated with a chassis of a camper van, the panels of the furniture cabinet shown removed for purposes of illustration, the compressor refrigerator annotated to show the flow of cooling air from a cold air entrance to a hot air exit.
Figure 5 is a side view of the compressor refrigerator of Figure 1 similar to Figure 3, the compressor refrigerator again shown operatively associated with a chassis of a camper van and further with a panel of the furniture cabinet removed for purposes of illustration.
Figure 6 is a rear perspective view of the compressor refrigerator of Figure 1, the compressor refrigerator annotated to show the flow of cooling air from a cold air entrance to a hot air exit.
Figure 7 is a schematic diagram illustrating various components of a compressor refrigerator constructed in accordance with an example not part of the claimed invention to be operative in a first modus and a second modus.

Corresponding reference numerals indicate corresponding parts throughout the several views of the drawings.

### DETAILED DESCRIPTION OF VARIOUS ASPECTS

The following description is merely exemplary in nature and is not intended to limit the present disclosure, its application, or uses. It should be understood that throughout the drawings, corresponding reference numerals indicate like or corresponding parts and features.

With general reference to the drawings, a refrigerator constructed in accordance with the present teachings is illustrated and generally identified at reference character 10. As will be further appreciated below, the present teachings may be used in connection with a refrigerator 10 for a motor vehicle 12 such as a camper van. A camper van 12 is a leisure vehicle that has an intact outer chassis 14. It will be understood, however, that the present teachings are not limited to this exemplary use. Rather, the refrigerator 10 described herein may be used with various other motor vehicles. Further, the present teachings may also be adapted for stationary uses for cooling.

The present teachings are generally directed to a compressor refrigerator. The compressor refrigerator includes a housing defining an interior volume and a cooling system 18 that cools the interior volume. A door 20 selectively provides access to the interior volume. The cooling system 18 has a cooling fan 22 and a compressor 24.

Temperatures experienced by the refrigerator 10 within the motor vehicle 12 may frequently be higher as compared to outside or ambient air. This may be particularly true where the refrigerator 10 is mounted within the vehicle 12 at an elevated position. The cooling system 18 must have sufficient cooling capacity to ensure proper performance of the refrigerator 10. Heat generated by the cooling system during cooling of the interior volume of the refrigerator 10 may be conventionally transferred to the interior of the motor vehicle 12.

The refrigeration arrangement 16 of the present teachings may further include a furniture cabinet 26 for mounting the refrigerator 10 within the motor vehicle 12. The furniture cabinet 26 may include a plurality of panels 28 defining a box for receiving the refrigerator 10. As shown in various of the drawings, the furniture cabinet 26 may define a box for receiving the refrigerator 10 in an elevated position that is easily accessible by occupants of the motor vehicle 12. The side panels 28 of the furniture cabinet 26 may follow the shape of the chassis 14 of the motor vehicle 12. With the exception of the open front, it will be understood that the side panels 28 of the furniture cabinet 26 cooperate with the chassis 14 of the vehicle 12 to define a closed box which receives the refrigerator 10.

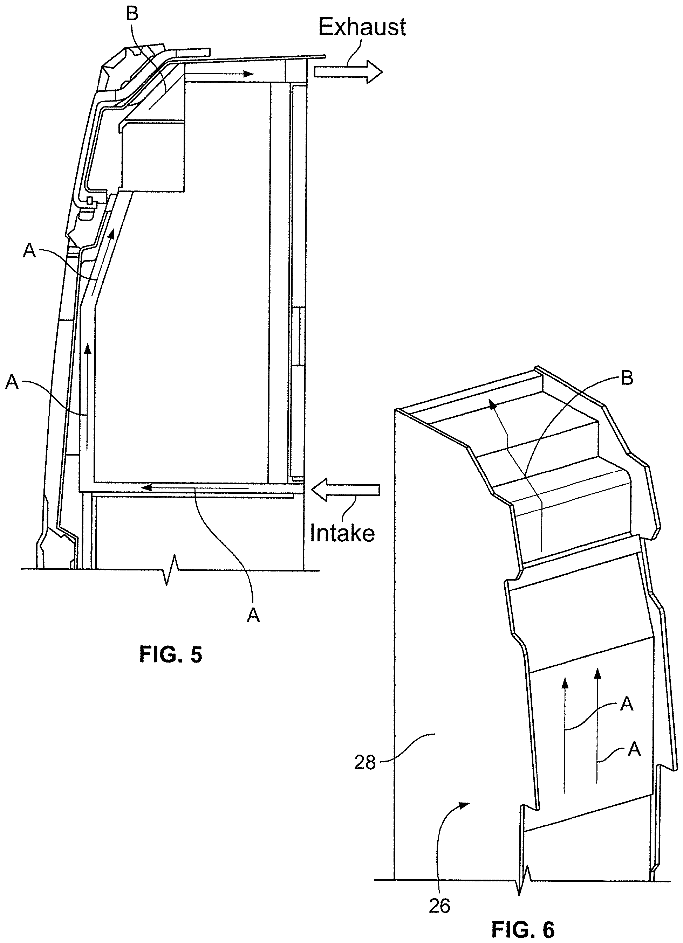

The refrigerator 10, the furniture cabinet 26 and the chassis 14 of the motor vehicle 12 may cooperate to define an air flow path for routing air past components of the cooling system 18 (e.g., condenser, compressor 24, electronics 30) to cool the components of the cooling system 18. As shown particularly in Figures 5 and 6, the air flow path includes a cold air area (indicated by arrows A) and a hot air area (indicated by arrows B). Cold air is drawn from adjacent a bottom of the refrigerator 10. Airflow may be induced by a fan 22. In a static situation, cold air flow may be induced by a funneling effect - the cold air flow is heated up by the hot components of the cooling system 18 and air may flow by means of convection. As illustrated, cold air is drawn in from a bottom front of the refrigerator 10 (see arrow INTAKE) and blown out at the top front into the interior of the motor vehicle 12 (see arrow EXHAUST). It will be understood, however, that the air flow may alternatively be in directions to the sides or back of the refrigerator 10.

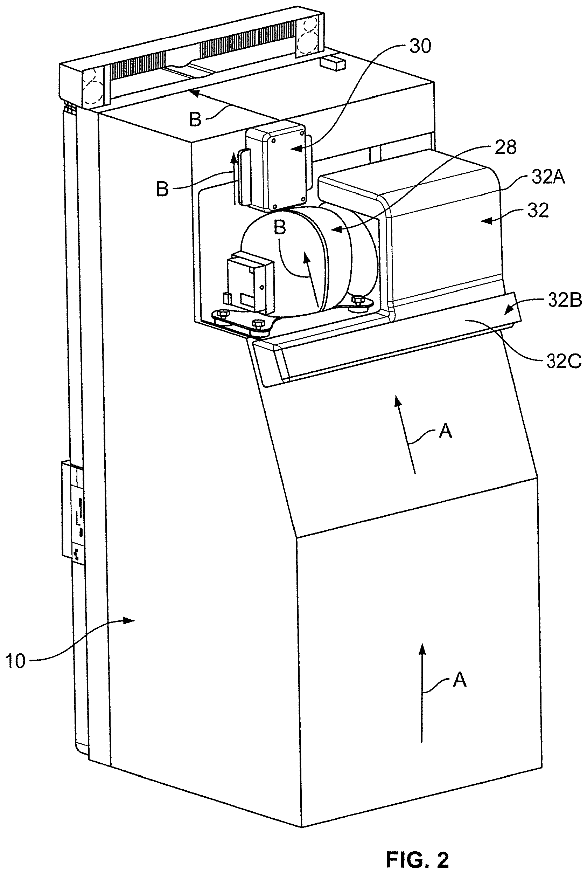

As perhaps best shown in the partially cutaway view of Figure 2, the refrigerator 10 of the present teachings may include an air funnel 32. The air funnel 32 may function to more efficiently guide air past the components of the cooling system 18. The air funnel 32 extends laterally across the back of the refrigerator 10 and may be secured to the refrigerator 10 with fasteners or in any manner well known in the art.

The air funnel 32 includes an upper portion 32A that is L-shaped. The upper portion encloses the components of the cooling system in a rearward direction. In the embodiment illustrated, the upper portion 32A of the air funnel 32 may include open lateral sides. These upon sides may be closed by the lateral panels 28 of the furniture cabinet 26. In other applications, the upper portion 32A of the air funnel 32 may include closed lateral sides.

The air funnel 32 further includes a lower portion 32B for receiving the flow of cooling air. The lower portion 32B includes a flange 32C. As shown, the flange 32C is oriented generally parallel to an adjacent surface of the refrigerator 10. As such, the flange 32C is angled relative to a vertical direction in the embodiment illustrated. The cold air is received under the flange 32C and directed to the components (e.g., 28, 30, etc.) of the cooling arrangement 18. Again, the lateral sides of the lower portion 32B may be open (and closed by the lateral panels of the furniture cabinet) or may be closed.

The air funnel 32 may rest against the chassis 14 of the motor vehicle 12. As particularly illustrated, the air funnel 32 may rest against a transverse strengthening beam of the chassis 14. A divider sealant may be carried on the lower portion of the air funnel 32. The divider sealant may be a soft foam for creating an airtight seal between the refrigerator 10 and the chassis 14 of the motor vehicle 12. In this manner, the air funnel 32 defines a division between the cold air area and the hot air area of the airflow. This division prevents cold and hot air flow from mixing, thereby improving the performance of the refrigerator 10. Alternatively, it will be understood that this division may be created by the funnel 32 engaging a prepared divider (e.g., plank or beam) that is an integral part of the furniture cabinet.

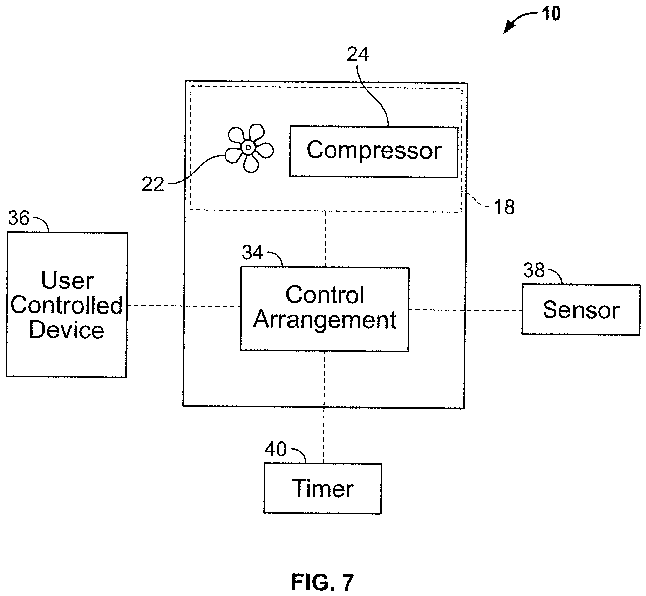

With reference now to the schematic view of Figure 7, various components of a compressor refrigerator constructed in accordance with an example not part of the claimed invention to be operative in a first modus and a second modus are illustrated. The compressor refrigerator 10 will be understood to conventionally include a housing that defines an interior volume. The compressor refrigerator 10 further includes a cooling system 18 that cools the interior volume.

The cooling system 18 may include a compressor 24 and a cooling fan 22. The cooling system 18 may be operative in a first modus and a second modus. In the first modus, the compressor 24 may run at a first compressor speed and the cooling fan 22 may run at a first cooling fan speed. In the second modus, the compressor 24 may run at a second compressor speed and the cooling fan 22 may run at a second cooling fan speed. The first compressor speed is greater than the second compressor speed and the first cooling fan speed is greater than the second cooling fan speed.

The compressor refrigerator 10 may further include a control arrangement 34 for selectively controlling the cooling system 18 to operate in one of the first modus and the second modus. In one application, the control arrangement 34 may be user controlled with a user controlled device 36. The user controlled device 36 may be selected from a group consisting of a switch, a button and a sound controlled device. The sound controlled device may be responsive to voice commands, predetermined voice levels or clapping, for example.

In other applications, the control arrangement 34 may be automatically responsive to a condition within the motor vehicle 12 for switching the cooling system 18 between the first modus and the second modus. In such an application, the compressor refrigerator 10 may further include a sensor 38 for sensing a predetermined condition and switching the cooling system 18 between the first modus and the second modus in response to sensing of the predetermined condition. The predetermined condition may be selected from a group consisting of a predetermined light condition, a predetermined temperature condition, and a predetermined noise level, for example. The first modus may be a day modus. The second modus may be a night modus.

In still yet other applications, the compressor refrigerator 10 may further include a timer 40 for switching the cooling system 18 between the first modus and the second modus. The timer 40 may be adjusted by the user and may be used for switching the control system 18 between the first modus and second modus at selected times.

Accordingly, it will be appreciated that the present teachings provide an arrangement in which a compressor refrigerator 10 cooperates with the general shape of the inside of a vehicle 10, such as a camper van, to create a venting channel for maintaining or improving the performance of the compressor refrigerator 10 without unnecessarily taking up the limited space within the vehicle.

According to an example is provided a compressor refrigerator 10 having a two state cooling unit defining a day modus and a night modus. In the day modus, a cooling unit of the compressor refrigerator can run on "full speed". In the night modus, the cooling unit of the compressor refrigerator may be slowed down to reduce noise and power consumption.

While specific examples have been discussed in the specification and illustrated in the drawings, it will be understood by those skilled in the art that various changes may be made and equivalence may be substituted for elements thereof without departing from the scope of the present teachings as defined in the appended claims.

## Claims

1. A compressor refrigerator (16) for a motor vehicle (12), comprising:
a housing that defines an interior volume, a cooling system (18) for cooling the interior volume and an air funnel (32) for guiding a flow of air past components (24, 30) of the cooling system (18), to cool the components (24, 30) of the cooling system (18), **characterized in**
**that** the air funnel (32) includes an upper portion (32A) that is L-shaped and mounted to a rear side of the refrigerator (16), the upper portion (32A) enclosing components of the cooling system (18) in a rearward direction, and
**that** the air funnel (32) further includes a lower portion (32B) with a flange (32C) parallel to an adjacent surface of the refrigerator and angled relative to a vertical direction, the lower portion (32B) for receiving the flow of cooling air to cool the components (24, 30) of the cooling system (18).

2. The refrigerator of claim 1, wherein the air funnel (32) defines a division between a lower cold air portion of the airflow and an upper hot air portion of the airflow and thereby prevents mixture of the lower cold air portion and upper hot air portion of the airflow to improve efficiency of the refrigerator (16).

3. The refrigerator of claim 1, wherein a source of cold cooling air is drawn into the path for cooling air proximate a lower end of the refrigerator (16) and warm air is expelled from the path for cooling air proximate an upper end of the refrigerator (16).

4. A refrigerator arrangement (10) for a motor vehicle comprising:
a compressor refrigerator (16) according to any of the preceding claims and
a furniture cabinet (26).

5. A motor vehicle (12) comprising:
a chassis (14) and
a refrigerator arrangement (10) according to claim 4, wherein
the compressor refrigerator (16) and the furniture cabinet (26) follow a shape of the chassis (14) of the motor vehicle (12) and cooperate with the motor vehicle (12) to define a path for cooling air to cool components of the cooling system (18).

6. The motor vehicle (12) of claim 5, wherein the air funnel (32) rests against the chassis (14) of the vehicle (12).

7. The motor vehicle (12) of claim 6, wherein the air funnel (32) rests against a transverse strengthening beam of the chassis (14).

8. The motor vehicle (12) of claim 6, further comprising an airtight seal between the air funnel (32) and the chassis (14) of the motor vehicle (12).

## Patentansprüche

1. Kompressorkühlschrank (16) für ein Kraftfahrzeug (12), wobei der Kompressorkühlschrank aufweist:
ein Gehäuse, das ein Innenvolumen definiert, ein Kühlsystem (18) zur Kühlung des Innenvolumens, und einen Luftkanal (32), um eine Strömung von Luft an Komponenten (24, 30) des Kühlsystems (18) vorbei zu führen, um die Komponenten (24, 30) des Kühlsystems (18) zu kühlen,
**dadurch gekennzeichnet, dass**
der Luftkanal (32) einen oberen Abschnitt (32A) enthält, der L-förmig ist und an einer Rückseite des Kühlschranks (16) angebracht ist, wobei der obere Abschnitt (32A) Komponenten des Kühlsystems (18) in einer Rückwärtsrichtung einschließt, und
der Luftkanal (32) ferner einen unteren Abschnitt (32B) mit einem Flansch (32C) parallel zu einer angrenzenden Oberfläche des Kühlschranks und angewinkelt relativ zu einer vertikalen Richtung enthält, wobei der untere Abschnitt (32B) zum Empfangen der Strömung von Kühlluft zum Kühlen der Komponenten (24, 30) des Kühlsystems (18) dient.

2. Kühlschrank nach Anspruch 1, wobei der Luftkanal (32) zwischen einem unteren Kaltluftabschnitt der Luftströmung und einem oberen Heißluftabschnitt der Luftströmung eine Teilung definiert und dadurch eine Mischung des unteren Kaltluftabschnitts und des oberen Heißluftabschnitts der Luftströmung verhindert, um den Wirkungsgrad des Kühlschranks (16) zu verbessern.

3. Kühlschrank nach Anspruch 1, wobei eine Quelle der kalten Kühlluft in den Weg angesaugt wird, um Luft in der Nähe eines unteren Endes des Kühlschranks (16) zu kühlen, und wobei Warmluft von dem Weg ausgestoßen wird, um Luft in der Nähe eines oberen Endes des Kühlschranks (16) zu kühlen.

4. Kühlschrankanordnung (10) für ein Kraftfahrzeug, wobei die Kühlschrankanordnung aufweist:
einen Kompressorkühlschrank (16) nach einem der vorhergehenden Ansprüche und
einen Möbelschrank (26).

5. Kraftfahrzeug (12), das aufweist:
ein Chassis (14) und
eine Kühlschrankanordnung (10) nach Anspruch 4, wobei
der Kompressorkühlschrank (16) und der Möbelschrank (26) einer Form des Chassis (14) des Kraftfahrzeugs (12) folgen und mit dem Kraftfahrzeug (12) zusammenwirken, um einen Weg für Kühlluft zum Kühlen von Komponenten des Kühlsystems (18) zu definieren.

6. Kraftfahrzeug (12) nach Anspruch 5, wobei der Luftkanal (32) an dem Chassis (14) des Fahrzeugs (12) anliegt.

7. Kraftfahrzeug (12) nach Anspruch 6, wobei der Luftkanal (32) an einem in Querrichtung verlaufenden Verstärkungsträger des Chassis (14) anliegt.

8. Kraftfahrzeug (12) nach Anspruch 6, das ferner zwischen dem Luftkanal (32) und dem Chassis (14) des Kraftfahrzeugs (12) eine luftdichte Abdichtung aufweist.

## Revendications

1. Un réfrigérateur à compresseur (16) pour un véhicule à moteur (12), comprenant :
un boîtier qui définit un volume intérieur, un système de refroidissement (18) pour refroidir le volume intérieur et un entonnoir d'air (32) pour guider un flux d'air au-delà des composants (24, 30) du système de refroidissement (18) afin de refroidir les composants (24, 30) du système de refroidissement (18), **caractérisé en ce**
**que** l'entonnoir d'air (32) comprend une partie supérieure (32A) en forme de L et montée sur une face arrière du réfrigérateur (16), la partie supérieure (32A) enfermant des composants du système de refroidissement (18) vers l'arrière et
**que** l'entonnoir d'air (32) comprend en outre une partie inférieure (32B) avec une bride (32C) parallèle à une surface adjacente du réfrigérateur et en angle par rapport à une direction verticale, la partie inférieure (32B) prévue pour recevoir le flux d'air de refroidissement pour refroidir les composants (24, 30) du système de refroidissement (18).

2. Le réfrigérateur selon la revendication 1, l'entonnoir d'air (32) définissant une division entre une partie inférieure d'air froid du flux d'air et une partie supérieure d'air chaud du flux d'air et, par conséquent, empêchant le mélange de la partie inférieure d'air froid et la partie supérieure d'air chaud du flux d'air afin d'améliorer l'efficacité du réfrigérateur (16).

3. Le réfrigérateur selon la revendication 1, une source d'air de refroidissement froid étant amenée dans la voie pour air de refroidissement à proximité d'une extrémité inférieure du réfrigérateur (16) et de l'air chaud étant expulsé de la voie pour air de refroidissement à proximité d'une extrémité supérieure du réfrigérateur (16).

4. Un agencement de réfrigérateur (10) pour un véhicule à moteur comprenant :
un réfrigérateur à compresseur (16) selon une des revendications précédentes et
une armoire d'équipement (26).

5. Un véhicule à moteur (12) comprenant :
un châssis (14) et
un agencement de réfrigérateur (10) selon la revendication 4,
le réfrigérateur à compresseur (16) et l'armoire d'équipement (26) suivant une forme du châssis (14) du véhicule à moteur (12) et coopérant avec le véhicule à moteur (12) pour définir une voie pour air de refroidissement afin de refroidir les composants du système de refroidissement (18).

6. Le véhicule à moteur (12) selon la revendication 5, l'entonnoir d'air (32) reposant contre le châssis (14) du véhicule (12).

7. Le véhicule à moteur (12) selon la revendication 6, l'entonnoir d'air (32) reposant contre une poutre de renforcement transversale du châssis (14).

8. Le véhicule à moteur (12) selon la revendication 6, comprenant en outre un joint d'étanchéité entre l'entonnoir d'air (32) et le châssis (14) du véhicule à moteur (12).
